# EUROPÄISCHE PATENTSCHRIFT

(11) **EP 0 461 217 B1**
(45) Veröffentlichungstag und Bekanntmachung des Hinweises auf die Patenterteilung: **28.06.1995**
(21) Anmeldenummer: 91900228.7
(22) Anmeldetag: 07.12.1990
(51) Int. Cl.: G01N 29/04

(54) **VERFAHREN ZUR AKUSTISCHEN PRÜFUNG VON MONOLITHEN AUF BESCHÄDIGUNG UND VORRICHTUNG ZUR DURCHFÜHRUNG DES VERFAHRENS**
PROCESS FOR THE ACOUSTIC EXAMINATION OF MONOLITHS FOR DAMAGE AND DEVICE FOR IMPLEMENTING THE PROCESS
PROCEDE DE CONTROLE ACOUSTIQUE DE MONOLITHES, PORTANT SUR LEUR DETERIORATION, ET DISPOSITIF POUR LA MISE EN UVRE DE CE PROCEDE

(30) Priorität: 28.12.1989 DE 3943133
(43) Veröffentlichungstag der Anmeldung: 18.12.1991
(73) Patentinhaber: ZEUNA-STÄRKER GMBH & CO KG, D-86016 Augsburg (DE)
(72) Erfinder: RINGEL, Werner, D-8902 Neusäss (DE); KUGLAND, Peter, D-8904 Friedberg (DE); SANTIAGO, Enrique, D-8901 Diedorf (DE)
(74) Vertreter: Grättinger, Günter
(86) Internationale Anmeldenummer: EP9002115
(87) Internationale Veröffentlichungsnummer: WO9110131

(56) Entgegenhaltungen:
- EP-A- 0 056 772

## Beschreibung

Die vorliegende Erfindung betrifft ein Verfahren zur akustischen Prüfung von Monolithen auf Beschädigung sowie eine Vorrichtung zur Durchführung des Verfahrens.

Monolithische Trägerkörper, wie sie beispielsweise zur Herstellung von Abgaskatalysatoren und Rußfiltern für Kraftfahrzeuge verwendet werden, bestehen ühlicherweise aus relativ spröden keramischen Werkstoffen. Die große Sprödigkeit des verwendeten Materials führt dazu, daß die Monolithen bei ihrer Herstellung oder Weiterverarbeitung beschädigt werden können; insbesondere können sich bei der Handhabung eines Monolithen an dessen Oberfläche oder in seinem Inneren feine Risse bilden. Derartige Risse machen den Trägerkörper praktisch unbrauchbar, da sie einen Ausgangspunkt für einen möglichen späteren Bruch des Monolithen bilden; eine Zerstörung derartiger, Risse aufweisender Monolithen kann schon bei relativ geringen Belastungen beispielsweise durch Erschütterungen bei ihrer Verarbeitung und/oder während des Betriebes erfolgen. Aus diesem Grunde dürfen monolithische Trägerkörper, auch wenn sie nur geringfügig beschädigt sind, nicht zur Weiterverarbeitung gelangen.

Es ist daher geboten, Trägerkörper vor ihrer Weiterverarbeitung auf mögliche Beschädigungen zu überprüfen. Neben einer optischen Überprüfung, welche sich naturgemäß nur auf den Zustand der Oberfläche richten kann, erfolgt noch eine akustische Prüfung. Hierbei schlägt eine geschulte Bedienungsperson den Monolithen leicht an und beurteilt das anschließend von dem Monolithen abgestrahlte Geräusch. Hierbei wird die Erkenntnis genutzt, daß Risse im Inneren des Monolithen dessen Schwingverhalten und somit die abgestrahlten Frequenzen beeinflussen.

Einer derartigen akustischen Prüfung haften verschiedene Nachteile an: Zum einen ist die Reproduzierbarkeit nicht zufriedenstellend, weil das subjektive Klangempfinden der prüfenden Person für das Ergebnis der Prüfung maßgeblich ist. Auch beeinflussen Ort und Stärke des Anschlages, der bei dem bekannten Vorgehen zur akustischen Prüfung von Hand vorgenommen wird, das Ergebnis der Prüfung, insofern als die daraus folgende unterschiedliche Lautheit des abgestrahlten Geräusches das Schallempfinden der Prüfperson verändert. Insgesamt ergibt sich somit eine geringe Zuverlässigkeit der herkömmlichen akustischen Prüfung, was in der Praxis durch einen großen Anteil von Monolithen zum Ausdruck kommt, die weder eindeutig als einwandfrei, noch eindeutig als beschädigt einstufbar sind. Nachdem aus Sicherheitsgründen aber nur solche Monolithen weiterverarbeitet werden, die als eindeutig einwandfrei eingestuft wurden, führt die dargelegte Unzuverlässigkeit der verwendeten Prüfmethode zu einer relativ hohen Ausschußrate bei der Produktion und somit zu höheren Fertigungskosten.

In der EP-A-0056772 ist eine Vorrichtung beschrieben, mit deren Hilfe der Zustand eines zu prüfenden Körpers ermittelt werden kann, wobei der zu prüfende Körper angeschlagen und das von ihm daraufhin abgestrahlte Geräusch analysiert wird. Die Vorrichtung umfaßt demgemäß einen Schallaufnehmer, einen Mikroprozessor und eine Anzeigeeinrichtung für das ermittelte Resultat.

Aus der US-A-4858469 sind zwei Verfahren zur Überprüfung von Holz, beispielsweise von Eisenbahnschwellen, im Hinblick auf Fäulnis oder dgl. bekannt, bei denen ebenfalls der zu prüfende Körper angeschlagen wird und anschließend Schwingungen des Körpers ermittelt und ausgewertet werden. Bei dem ersten beschriebenen Verfahren werden durch denselben Anschlag verursachte Schwingungen des Körpers an dessen Oberfläche einerseits und in dessen Innerem andererseits miteinander verglichen; die Abweichung zwischen beiden Schwingungsarten deutet dabei auf einen Schaden im geprüften Holz hin. Bei dem zweiten beschriebenen Verfahren werden entweder innere Schwingungen oder Oberflächenschwingungen mit geeigneten Aufnehmern ermittelt, wobei ein oder mehrere Aufnehmer vorgesehen sein können, und die ermittelten Schwingungen werden mit denen von gesundem Holz verglichen; über die Anordnung der Schwingungsaufnehmer, sofern mehrere vorgesehen sind, sowie über die zeitliche Beziehung der Messungen zueinander werden keine Aussagen getroffen. Die in dieser Druckschrift beschriebenen Verfahren sind geprägt von der besonderen Anwendung, nämlich der Prüfung von Eisenbahnschwellen in verlegtem Zustand.

Der vorliegenden Erfindung liegt die Aufgabe zugrunde, ein Verfahren zur akustischen Prüfung von Monolithen auf Beschädigung zu schaffen, das sich durch eine große Zuverlässigkeit auszeichnet.

Erfindungsgemäß wird diese Aufgabe durch ein Verfahren der gattungsgemäßen Art mit den folgenden Verfahrensschritten gelöst:
- Auf einen festgelegten Monolithen wird mit einem harten Anschlagkörper ein Kraftstoß definierter Größe aufgebracht;
- es werden synchron Schalldruck-Messungen mit mindestens zwei voneinander beabstandeten Schalldruckaufnehmern zur Messung des vom angestoßenen Monolithen abgestrahlten Geräusches in deutlich unterschiedlichen Ausbreitungsrichtungen ausgeführt;
- die Schalldruck/Frequenz-Verteilung des vom angestoßenen Monolithen abgestrahlten Geräusches wird mittels eines Frequenz-Analysators in einer Auswerteeinheit analysiert;
- das Analysenergebnis wird mindestens im Umfang einzelner, für den geprüften Monolithen charakteristischer Referenzpunkte mit einer für unbeschädigte Monolithen bestimmten Referenzkurve verglichen.

Eine zur Durchführung dieses Verfahrens geeignete Vorrichtung ist in Anspruch 16 angegeben.

Wesentliches Merkmal der Erfindung ist somit, daß synchron mindestens zwei Schalldruck-Messungen in unterschiedlichen Ausbreitungsrichtungen erfolgen. Nachdem die in einer bestimmten Raumrichtung abgestrahlte Schalldruck-Verteilung in erheblichem Maße durch die Lage und Ausrichtung des Risses im Monolithen beeinflußt wird, ist es bei einer einzigen Schalldruck-Messung in nur einer Ausbreitungsrichtung nämlich nicht auszuschließen, daß ein "ungünstig" gelegener Riß unerkannt bleibt. Bei einer synchronen Durchführung von zwei oder mehr Schalldruck-Messungen in unterschiedlichen Ausbreitungsrichtungen wird jedoch stets mindestens bei einer Meßkurve eine solche Verschiebung der Schalldruck-Verteilung auftreten, daß der Riß erkannt wird. Somit trägt die Maßnahme, synchron mindestens zwei Schalldruck-Messungen in unterschiedlichen Ausbreitungsrichtungen durchzuführen, erheblich zu einer hohen Zuverlässigkeit des erfindungsgemäßen Verfahrens bei.

Durch die Verwendung eines Frequenz-Analysators zur Bestimmung der Schalldruck/Frequenz-Verteilung des abgestrahlten Geraüsches werden zudem die bei manuellen Prüfverfahren durch das subjektive Hörempfinden der Prüfperson verursachten Unsicherheiten zuverlässig ausgeschlossen. Der Vergleich des Analysenergebnisses mit einer für unbeschädigte Monolithen geltenden Referenzkurve trägt ebenfalls zur Erhöhung der Zuverlässigkeit des Prüfverfahrens bei. In diesem Zusammenhang ist auch die Erkenntnis von großer Bedeutung, daß sich unbeschädigte und beschädigte Monolithen insbesondere hinsichtlich ihrer Schalldruck-Verteilung bei hohen Frequenzen (z.B. zwischen 4 und 12 kHz) unterscheiden, während das menschliche Gehör seine größte Empfindlichkeit bei etwa 1 kHz besitzt. In der Tatsache, daß die Empfindlichkeit des menschlichen Gehörs in dem Frequenzspektrum, welches für die Unterscheidung von beschädigten und unbeschädigten Monolithen von maßgeblicher Bedeutung ist, beträchtlich geringer ist als bei tieferen Frequenzen, kann eine Erklärung für die relativ große Fehlerquote bei dem herkömmlichen Prüfverfahren gesehen werden. Bei dem erfindungsgemäßen Verfahren spielt die grundsätzlich mangelhafte Eignung des menschlichen Gehörs für den vorliegenden Zweck keine Rolle mehr.

Besonders bevorzugt werden bei einem zylindrischen Monolithen genau zwei Schalldruck-Messungen durchgeführt, von denen die eine in axialer Richtung und die andere in radialer Richtung erfolgt. Dies trifft in gleicher Weise für kreiszylindrische Monolithen wie für solche zylindrischen Monolithen mit einer anderen Grundfläche, z.B. einer Ellipse zu.

Wie bereits dargelegt wurde, tritt eine charakteristische Verschiebung der Schalldruck-Verteilung bei beschädigten Monolithen insbesondere in dem Bereich zwischen 4 und 12 kHz auf, weshalb bei einer bevorzugten Ausgestaltung des erfindungsgemäßen Verfahrens die Frequenzanalyse zweckmäßig auf diesen Bereich beschränkt wird. Besonders bevorzugt findet dabei der Vergleich des Analysenergebnisses mit der Referenzkurve nicht in dem gesamten Spektrum, sondern bloß in einzelnen ausgesuchten Referenzpunkten statt.

Die Referenzpunkte sind dabei für den einzelnen Monolithen-Typ charakteristische Frequenzen, d.h. insbesondere solche Frequenzen, bei denen das vom angeschlagenen Monolith abgestrahlte Geräusch einen besonders hohen Schalldruck besitzt. Die Referenzkurve besitzt bei diesen Frequenzen sogenannte "Peaks". Die Referenzpunkte werden dabei für den jeweiligen Monolithen-Typ in einer Vorversuchs-Reihe ermittelt.

Der Vergleich des Analysenergebnisses mit der Referenzkurve erfolgt in einer Rechnereinheit, welche mit der Auswerteeinheit verbunden ist. Der Vergleich kann dabei insbesondere durch Vergleich der Peaks hinsichtlich ihrer Frequenz, ihrer Anzahl in einem vorgegebenen Frequenzband und/oder hinsichtlich ihrer Amplitude (Schalldruck) erfolgen.

Bei einer bevorzugten Ausgestaltung des erfindungsgemäßen Verfahrens wird bei der Schalldruck-Analyse das Aufschlaggeräusch des Anschlagkörpers nicht berücksichtigt. Auf diese Weise wird eine Verfälschung der Messung der abgestrahlten Frequenzen durch das beim Aufschlag des Anschlagkörpers auf den Monolithen entstehende Geräusch vermieden; die Schalldruck-Analyse beschränkt sich vielmehr ausschließlich auf das abgestrahlte Geräusch und besitzt daher eine höhere Aussagekraft hinsichtich des Zustandes des geprüften Monolithen. Besonders bevorzugt setzt die Schalldruck-Analyse zwischen 5 und 30 ms nach dem Aufschlag des Anschlagkörpers ein.

Der Aufschlagkörper ist bevorzugt Teil eines Pendels und wird bei jedem Prüfvorgang vom gleichen Punkt der Pendelbahn losgelassen. Auf diese Weise wird erreicht, daß der auf den Monolithen aufgebrachte Kraftstoß stets die gleiche, leicht bestimmbare Größe besitzt. Der Anschlagkörper trifft bei zylindrischen Monolithen dabei bevorzugt auf eine der Stirnseiten auf, besonders bevorzugt in deren Zentrum.

Eine Vorrichtung, die zur Durchführung des erfindungsgemäßen Verfahren geeignet ist, besitzt eine Aufnahme für den zu prüfenden Monolithen, eine einen beweglichen Anschlagkörper umfassende Anschlageinrichtung, mindestens zwei in deutlich unterschiedliche Richtungen ausgerichtete, voneinander beabstandete Schalldruck-Aufnehmer und eine mit den Schalldruck-Aufnehmern verbundene Auswerteeinheit, die eine Rechnereinheit umfaßt, welche den Vergleich des in der Auswerteeinheit ermittelten Analyseergebnisses mit der Referenzkurve durchführt. Mit der Rechnereinheit ist zweckmäßigerweise eine Anzeigeeinheit verbunden, welche das Ergebnis der Prüfung anzeigt.

Um eine Lagerung von unterschiedlichen Monolithen-Typen in der Aufnahme zu ermöglichen, umfaßt diese bevorzugt drei Stützen zur Auflage des Monolithen. Alternativ hierzu ist die Ausgestaltung der Aufnahme als Aufspannplatte vorgesehen, welche wenigstens ein auf den jeweiligen Monolithen-Typ abgestimmtes Aufspannelement besitzt. Die Stützen bzw. das Aufspannelement besitzen dabei bevorzugt Dämpfungselemente aus einem elastisch nachgiebigen Material, um eine Schwingungsentkoppelung sicherzustellen. Die Anschlageinrichtung weist bevorzugt einen Pendelträger sowie ein Pendel auf, an welchem der Anschlagkörper vorgesehen ist. Ein derartiges Pendel gewährleistet ein besonders hohes Gleichmaß des vom Anschlagkörper auf den Monolithen übertragenen Kraftstoßes, was wiederum für die Reproduzierbarkeit der Meßergebnisse von großer Bedeutung ist. Besonders bevorzugt besteht dabei der Anschlagkörper aus einem ferromagnetischen Material und umfaßt die Anschlageinrichtung einen im oberen Endpunkt der Pendelbahn des Anschlagkörpers angeordneten Elektromagneten. Bei einer dermaßen ausgestalteten Vorrichtung wird der Prüfvorgang dadurch eingeleitet, daß der Elektromagnet stromlos gemacht wird, wodurch der ferromagnetische Anschlagkörper losgelassen wird und der vorgegebenen Pendelbahn folgend auf den Monolithen auftrifft.

Die Auswerteeinheit der erfindungsgemäßen Vorrichtung ist bevorzugt in der Weise beschaffen, daß sie den Beginn der Frequenz-Analyse in Abhängigkeit von dem Auftreffen des Anschlagkörpers auf den Monolithen steuert. Die der Auswerteeinheit zugeordnete Steuerung löst dabei die Frequenz-Analyse bevorzugt zwischen 5 und 30 ms nach dem Zeitpunkt aus, zu welchem der Anschlagkörper auf den Monolithen auftrifft; die Information über den Aufschlagzeitpunkt und das Aufschlaggeräusch wird der Auswerteeinheit von einem oder mehreren Schalldruck-Aufnehmern zugeführt. Zur Bestimmung der Schalldruck/Frequenz-Verteilung verfügt die Auswerteeinheit bevorzugt über einen FFT-Analysator, d.h. die Schalldruck-Verteilung wird mittels einer "Fast Fourier Transformation" ermittelt. Als Schalldruck-Aufnehmer sind besonders bevorzugt Kondensator-Mikrofone vorgesehen.

Anhand der Zeichnung wird im folgenden die Erfindung näher erläutert. Es zeigt
- Fig. 1: ein Ausführungsbeispiel einer Vorrichtung zur Durchführung des erfindungsgemäßen Verfahrens,
- Fig. 2: eine Schalldruck/Frequenz-Verteilung eines unbeschädigten Monolithen und
- Fig. 3: eine Schalldruck/Frequenz-Verteilung eines beschädigten Monolithen, wobei in den Figuren 2 und 3 jeweils zwei in unterschiedlichen Ausbreitungsrichtungen ermittelte Meßkurven wiedergegeben sind.

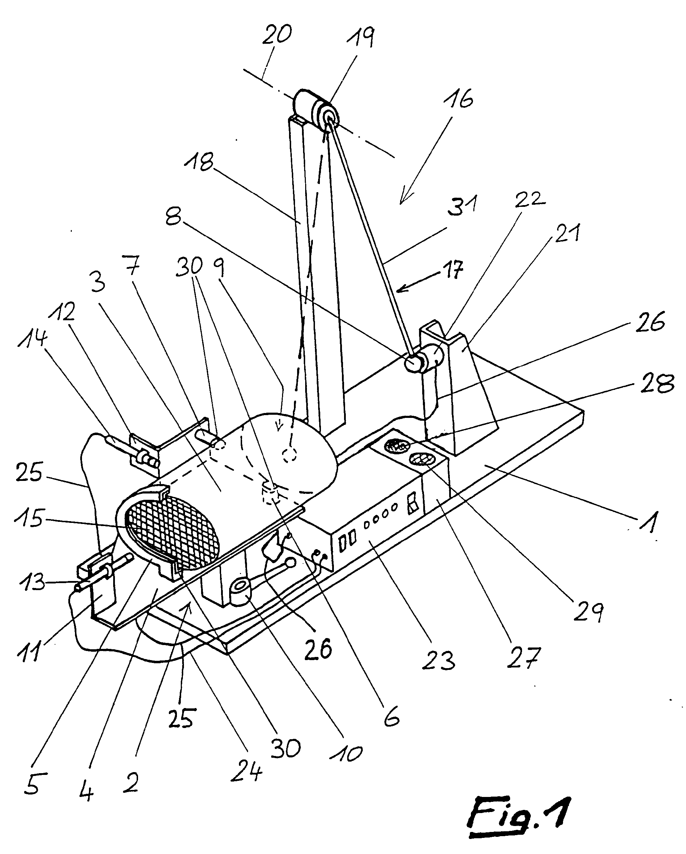

Die Prüfvorrichtung gemäß Fig. 1 ist auf einer Grundplatte 1 aufgebaut. Auf der Grundplatte 1 ist die Aufnahme 2 für den Monolithen 3 aufgebaut. Die Aufnahme 2 umfaßt eine Aufspannplatte 4, welche ein stirnseitiges Aufspannelement 5 sowie einen unteren Anschlag 6 und einen seitlichen Anschlag 7 für den Monolithen 3 trägt. Während das stirnseitige Aufspannelement 5 den Monolithen 3 insbesondere in seiner axialen Richtung festlegt, dienen die beiden Anschläge 6, 7 der Justierung des Monolithen in der Weise, daß der Anschlagkörper 8 genau im Zentrum der hinteren, d.h. vom Aufspannelement 5 entfernten Stirnfläche 9 des Monolithen 3 auftrifft. Sowohl die Anschläge 6, 7 als auch das Aufspannelement 5 besitzen an ihren Berührungsflächen mit dem Monolithen 3 Dämpfungselemente 30 aus elastisch nachgiebigem Material.

Die Aufspannplatte 4 ist mittels einer Schnellspannvorrichtung 10 an der Grundplatte 1 befestigt, wodurch zwei auf verschiedene Monolithen-Typen abgestimmte Aufnahmen 2 rasch gegeneinander ausgetauscht werden können. An der Aufspannplatte 4 sind zwei Mikrofonhalter 11, 12 angebracht, welche jeweils ein Kondensator-Mikrofon 13, 14 tragen. Dabei steht ein Kondensator-Mikrofon 13 der vorderen Stirnfläche 15 des Monolithen 3 gegenüber, während das andere Kondensator-Mikrofon 14 auf die Umfangsfläche des Monolithen 3 gerichtet ist.

Die Anschlageinrichtung 16 umfaßt ein Pendel 17, dessen freies Ende den Anschlagkörper 8 in Form einer Stahlkugel trägt. Das Pendel 17 ist an einem Galgen 18 aufgehängt, welcher fest mit der Grundplatte 1 verbunden ist. Das Pendel 17 besitzt eine als steifes Rohr ausgebildete Pendelstange 31, welche am Galgen 18 mittels eines Kugellagers 19 um eine horizontale Achse 20 schwenkbar angelenkt ist.

Auf der Grundplatte 1 sitzt ferner ein Magnetträger 21, an dessen dem Monolithen 3 zugewandter Stirnseite ein Elektromagnet 22 befestigt ist. Die Grundplatte 1 trägt ferner die Auswerteeinheit 23 mit einer integrierten Rechnereinheit, d.h. die Meß-, die Auswerte- und die Vergleichselektronik sind in demselben Gehäuse untergebracht. Mit der Auswerteeinheit 23 sind die Kondensator- Mikrofone 13, 14 über Leitungen 24, 25 verbunden. Der Elektromagnet 22 ist mit der Auswerteeinheit 23 über eine Leitung 26 verbunden. Die mit der Rechnereinheit gekoppelte Anzeigeeinheit 27 besitzt zwei Anzeigelampen 28, 29; die Anzeigelampe 28 leuchtet auf, wenn der geprüfte Monolith von der Rechnereinheit 23 als defekt ermittelt wird; demgegenüber leuchtet die Anzeigelampe 29 auf, wenn eine Wiederholung des Versuches beispielsweise infolge einer Fehlbedienung der Prüfvorrichtung erforderlich ist.

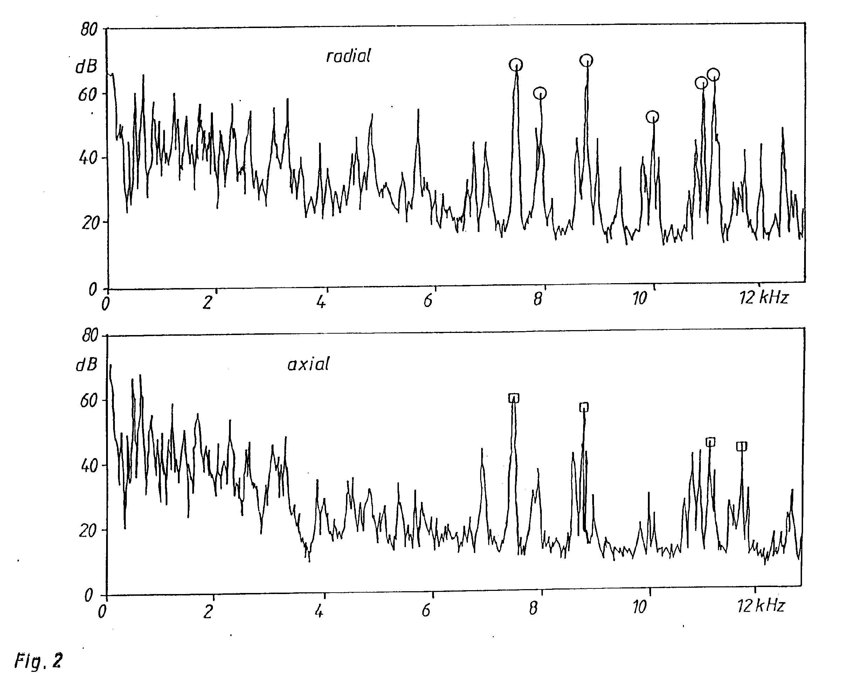

Fig. 2 zeigt eine Schalldruck/Frequenz-Verteilung, wie sie für einen unbeschädigten elliptisch-zylindrischen Monolithen 3 der Abmessungen 6,68" x 3,18" x 6" (16,97 cm x 8,08 cm x 15,24 cm) ermittelt wurde. Das berücksichtigte Frequenz-Spektrum reicht von 0 bis 12,8 kHz und ist auf der Abzsisse aufgetragen. Die an der Ordinatenachse angebrachte Skalierung für den Schalldruck reicht von 0 bis 80 dB.

Die im oberen Abschnitt der Fig. 2 dargestellte Verteilung wurde mit dem seitlich des Monolithen 3 angeordneten Mikrofon 14 (Fig. 1) ermittelt; die unten dargestellte Schalldruck/Frequenz-Verteilung wurde mit dem gegen die vordere Stirnfläche 15 gerichteten Mikrofon 13 (Fig. 1) ermittelt. Die Rechnereinheit war für den in Fig. 2 dargestellten Prüfversuch auf einen 10 ms-Post Trigger geschaltet, d.h. bei der Frequenz-Analyse blieben die ersten 10 ms nach dem Auftreffen des Anschlagkörpers 8 auf den Monolithen 3 unberücksichtigt.

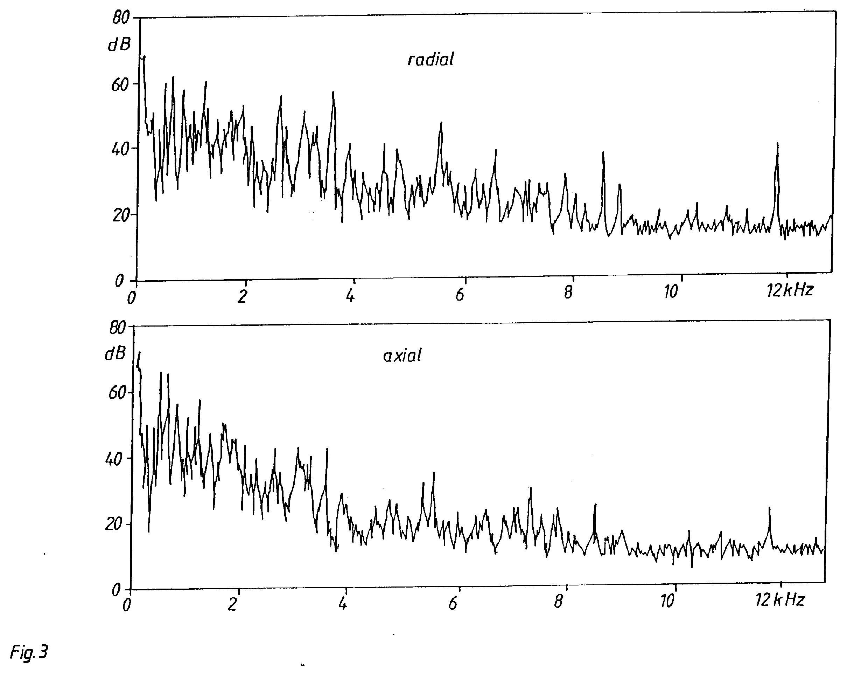

Fig. 3 zeigt die entsprechenden unter gleichen Versuchsbedingungen ermittelten Schalldruck/Frequenz-Verteilungen für einen defekten Monolithen des gleichen Typs. Fig. 3 zeigt deutlich, daß beim defekten Monolithen insbesondere im Frequenzbereich oberhalb 6 kHz die ausgeprägten Schallpegel-Spitzenwerte aus Fig. 2, welche den unbeschädigten Monolithen kennzeichnen, nicht auftreten. Insbesondere fehlen die beim unbeschädigten Monolithen vorhandenen Spitzenwerte bei 7,4; 7,9; 8,7; 10,0; 10,9 und 11,1 kHz der mit dem seitlich angeordneten Mikrofon ermittelten Schalldruck-Verteilung (Fig. 2, obere Darstellung, Ringmarkierung). Die genannten Frequenzen bilden somit charakteristische Referenzfrequenzen für den geprüften Monolithen-Typ. Entsprechendes gilt für die Frequenzen 7,4, 8,7, 10,8, 11,2 und 11,7 kHz hinsichtlich des stirnseitig angeordneten Mikrofons (Fig. 2, untere Darstellung, Kästchenmarkierung).

## Patentansprüche

1. Verfahren zur akustischen Prüfung von Monolithen auf Beschädigung mit folgenden Verfahrensschritten:
- Auf einen festgelegten Monolithen wird mit einem harten Anschlagkörper ein Kraftstoß definierter Größe aufgebracht;
- es werden synchron Schalldruck-Messungen mit mindestens zwei voneinander beabstandeten Schalldruckaufnehmern zur Messung des vom angestoßenen Monolithen abgestrahlten Geräusches in deutlich unterschiedlichen Ausbreitungsrichtungen ausgeführt;
- die Schalldruck/Frequenz-Verteilungen der Schalldruck-Messungen werden mittels eines Frequenz-Analysators in einer Auswerteeinheit analysiert;
- das Analysenergebnis wird mindestens im Umfang einzelner, für den geprüften Monolithen charakteristischer Referenzpunkte mit einer für unbeschädigte Monolithen bestimmten Referenzkurve verglichen.

2. Verfahren nach Anspruch 1, dadurch gekennzeichnet, daß an einem zylindrischen Monolithen genau zwei Schalldruck-Messungen durchgeführt werden, von denen eine in axialer Richtung und die andere in radialer Richtung erfolgt.

3. Verfahren nach Anspruch 1, dadurch gekennzeichnet, daß die Schalldruck-Verteilungen im Frequenzband zwischen etwa 4 und 12 kHz analysiert werden.

4. Verfahren nach Anspruch 1, dadurch gekennzeichnet, daß beim Vergleich der Analyseergebnisse mit den Referenzkurven die Frequenzen charakteristischer Peaks verglichen werden.

5. Verfahren nach Anspruch 1, dadurch gekennzeichnet, daß beim Vergleich der Analyseergebnisse mit den Referenzkurven die Anzahl der Peaks innerhalb eines ausgewählten Frequenzbandes verglichen werden.

6. Verfahren nach Anspruch 1, dadurch gekennzeichnet, daß beim Vergleich der Analyseergebnisse mit den Referenzkurven die Schalldrücke charakteristischer Peaks verglichen werden.

7. Verfahren nach Anspruch 1, dadurch gekennzeichnet, daß bei der Analyse der Schalldruck-Verteilungen das Aufschlaggeräusch des Anschlagkörpers im Aufschlagmoment nicht berücksichtigt wird.

8. Verfahren nach Anspruch 7, dadurch gekennzeichnet, daß die Analyse zwischen 5 und 30 ms nach dem Aufschlag des Anschlagkörpers einsetzt.

9. Verfahren nach Anspruch 1, dadurch gekennzeichnet, daß der Anschlagkörper die Masse an einem Pendel bildet und bei jedem Prüfvorgang vom gleichen Punkt der Pendelbahn losgelassen wird.

10. Verfahren nach Anspruch 1, dadurch gekennzeichnet, daß der Anschlagkörper auf eine der Stirnseiten eines zylindrischen Monolithen auftrifft.

11. Verfahren nach Anspruch 10, dadurch gekennzeichnet, daß der Anschlagkörper im Zentrum der Stirnseite auftrifft.

12. Verfahren nach Anspruch 1, dadurch gekennzeichnet, daß der Vergleich der Analysenergebnisse mit den Referenzkurven in einer Rechnereinheit erfolgt.

13. Verfahren nach Anspruch 12, dadurch gekennzeichnet, daß von der Rechnereinheit eine Anzeigeeinheit gesteuert wird, die anzeigt, ob das vom geprüften Monolithen abgestrahlte Geräusch innerhalb oder außerhalb der Referenzkurve oder eines vorgegebenen, die Referenzkurve umgebenden Toleranzbandes liegt.

14. Verfahren nach Anspruch 13, dadurch gekennzeichnet, daß die Anzeigeeinheit ein akustisches Signal erzeugt.

15. Verfahren nach Anspruch 13, dadurch gekennzeichnet, daß die Anzeigeeinheit ein optisches Signal für einen fehlerhaften Monolithen oder für eine notwendige Wiederholung der Prüfung erzeugt.

16. Vorrichtung zur Durchführung des Verfahrens gemäß Anspruch 1 mit einer Aufnahme (2) für den zu prüfenden Monolithen (3), einer einen beweglichen Anschlagkörper (8) umfassenden Anschlageinrichtung (16), mindestens zwei in deutlich unterschiedliche Richtungen ausgerichteten, voneinander beabstandeten Schalldruck-Aufnehmern (13, 14) und einer mit den Schalldruck-Aufnehmern verbundenen Auswerteeinheit (23), umfassend eine Rechnereinheit, welche den Vergleich der in der Auswerteeinheit ermittelten Analysenergebnisse mit Referenzkurven durchführt.

17. Vorrichtung nach Anspruch 16, dadurch gekennzeichnet, daß die beiden Schalldruck-Aufnehmer (13, 14) in der Weise angeordnet sind, daß einer auf die von der Anschlageinrichtung (16) abgewandte Stirnseite und der andere auf die Umfangsfläche des zu prüfenden Monolithen gerichtet ist.

18. Vorrichtung nach Anspruch 16, gekennzeichnet durch eine von der Auswerteeinheit (23) umfaßte Rechnereinheit und eine mit der Rechnereinheit verbundene Anzeigeeinheit (27).

19. Vorrichtung nach Anspruch 16, dadurch gekennzeichnet, daß die Aufnahme (2) drei Stützen zur Auflage des Monolithen (3) aufweist.

20. Vorrichtung nach Anspruch 16, dadurch gekennzeichnet, daß die Aufnahme (2) als Aufspannplatte (4) ausgebildet ist und daß wenigstens eine Stütze als an den zu prüfenden Monolithen (3) angepaßtes Aufspannelement (5) ausgebildet ist.

21. Vorrichtung nach Anspruch 20, dadurch gekennzeichnet, daß die Aufspannplatte (4) mittels einer Schnellspannvorrichtung (10) auf einer Grundplatte (1) befestigt ist.

22. Vorrichtung nach Anspruch 19, dadurch gekennzeichnet, daß die Stützen jeweils an ihren Berührungsflächen mit dem Monolithen (3) Dämpfungselemente (30) aus einem elastisch nachgiebigen Material besitzen.

23. Vorrichtung nach Anspruch 16, dadurch gekennzeichnet, daß die Anschlageinrichtung (16) ein Pendel (17) umfaßt, an dessen Pendelstange (31) der Anschlagkörper (8) die Pendelmasse bildet.

24. Vorrichtung nach Anspruch 23, dadurch gekennzeichnet, daß der Anschlagkörper (8) aus einem ferromagnetischen Material besteht und die Anschlageinrichtung (16) einen im oberen Endpunkt der Pendelbahn des Anschlagkörpers (3) angeordneten Elektromagneten (22) umfaßt.

25. Vorrichtung nach Anspruch 16, dadurch gekennzeichnet, daß als Schalldruck-Aufnehmer Kondensator-Mikrofone (13, 14) vorgesehen sind.

26. Vorrichtung nach Anspruch 16, dadurch gekennzeichnet, daß die Auswerteeinheit (23) einen FFT-Frequenz-Analysator umfaßt.

27. Vorrichtung nach Anspruch 18, dadurch gekennzeichnet, daß durch die Rechnereinheit eine Zeitverzögerung für die Frequenz-Analyse zwischen 5 und 30 ms nach dem Auftreffen des Anschlagkörpers (8) auf dem Monolithen (3) vorgesehen ist.

## Claims

1. Method for the acoustic checking of monoliths for damage with the following steps of the method:
- an impact of defined magnitude is applied by a hard striking member to a fixed monolith;
- sound pressure measurements are carried out synchronously with at least two sound pressure receivers, which are spaced apart from each other, for measuring the noise emitted by the struck monolith in clearly different directions of propagation;
- the sound pressure/frequency distributions of the sound pressure measurements are analysed by means of a frequency analyser in an evaluation unit;
- the analysis result is compared at least in the range of individual reference points which are characteristic of the monoliths checked, with a reference curve specific to undamaged monoliths.

2. Method according to Claim 1, characterised in that on a cylindrical monolith, exactly two sound pressure measurements are carried out, of which one takes place in the axial direction and the other in the radial direction.

3. Method according to Claim 1, characterised in that the sound pressure distributions are analysed in the frequency band between approximately 4 and 12 kHz.

4. Method according to Claim 1, characterised in that at the time of comparison of the analysis results, the frequencies of characteristic peaks are compared with the reference curves.

5. Method according to Claim 1, characterised in that at the time of comparison of the analysis results, the number of peaks within a selected frequency band is compared with the reference curves.

6. Method according to Claim 1, characterised in that at the time of comparison of the analysis results, the sound pressures of characteristic peaks are compared with the reference curves.

7. Method according to Claim 1, characterised in that at the time of analysis of the sound pressure distributions, the impact noise of the striking member at the time of impact is not taken into consideration.

8. Method according to Claim 7, characterised in that the analysis is carried out between 5 and 30 msecs. after the impact of the striking member.

9. Method according to Claim 1, characterised in that the striking member forms the mass on a pendulum and at the time of each checking operation is released from the same point of the pendulum trajectory.

10. Method according to Claim 1, characterised in that the striking member strikes one of the end faces of a cylindrical monolith.

11. Method according to Claim 10, characterised in that the striking member strikes in the centre of the end face.

12. Method according to Claim 1, characterised in that the comparison of the analysis results with the reference curves takes place in a computer unit.

13. Method according to Claim 12, characterised in that the computer unit controls an indicator, which indicates whether the noise emitted by the checked monolith lies within or outside the reference curve or a predetermined tolerance band encircling the reference curve.

14. Method according to Claim 13, characterised in that the indicator produces an acoustic signal.

15. Method according to Claim 13, characterised in that the indicator produces an optical signal for a faulty monolith or for a necessary repetition of the check.

16. Apparatus for carrying out the method according to Claim 1 with a holder (2) for the monolith (3) to be checked, a striking device (16) comprising a movable striking member (8), at least two sound pressure receivers (13, 14) spaced apart from each other and aligned in clearly different directions and an evaluation unit (23) connected to the sound pressure receivers, which unit (23) comprises a computer unit, which carries out the comparison of the analysis results ascertained in the evaluation unit, with reference curves.

17. Apparatus according to Claim 16, characterised in that the two sound pressure receivers (13, 14) are arranged in such a way that one is directed towards the end face remote from the striking device (16) and the other is directed towards the peripheral surface of the monolith to be checked.

18. Apparatus according to Claim 16, characterised by a computer unit included in the evaluation unit (23) and an indicator (27) connected to the computer unit.

19. Apparatus according to Claim 16, characterised in that the holder (2) comprises three supports for supporting the monolith (3).

20. Apparatus according to Claim 16, characterised in that the holder (2) is constructed as a clamping plate (4), and that at least one support is constructed as a clamping member (5) adapted to the monolith (3) to be checked.

21. Apparatus according to Claim 20, characterised in that the clamping plate (4) is fastened on a base plate (1) by means of a quick-action clamping device (10).

22. Apparatus according to Claim 19, characterised in that on their contact surfaces with the monolith (3), the supports respectively comprise damping members (30) of an elastically flexible material.

23. Apparatus according to Claim 16, characterised in that the striking device (16) comprises a pendulum (17), on the pendulum rod (31) of which the striking member (8) forms the pendulum mass.

24. Apparatus according to Claim 23, characterised in that the striking member (8) consists of a ferromagnetic material and the striking device (16) comprises a solenoid (22) located at the upper end point of the pendulum trajectory of the striking member (3).

25. Apparatus according to Claim 16, characterised in that capacitor microphones (13, 14) are provided as the sound pressure receivers.

26. Apparatus according to Claim 16, characterised in that the evaluation unit (23) comprises an FFT-frequency analyser.

27. Apparatus according to Claim 18, characterised in that due to the computer unit, a time delay for the frequency analysis of between 5 and 30 msecs. is provided after the striking member (8) strikes the monolith (3).

## Revendications

1. Procédé de contrôle acoustique de monolithes, portant sur leur détérioration, comportant les étapes suivantes:
- sur un monolithe prédéterminé, on applique une impulsion de grandeur définie, à l'aide d'un butoir;
- on effectue de façon synchrone des mesures de pression acoustique à l'aide d'au moins deux capteurs de pression acoustique espacés l'un par rapport à l'autre, pour mesurer dans des directions de propagation nettement distinctes le bruit émis par le monolithe percuté;
- on analyse les répartitions de pression acoustique/fréquences des mesures à l'aide d'un analyseur de fréquence d'une unité d'exploitation;
- on compare le résultat de l'analyse au moins dans le périmètre de points de référence isolés caractéristiques du monolithe testé, avec une courbe de référence établie pour des monolithes intacts.

2. Procédé selon la revendication 1, caractérisé en ce que sur un monolithe cylindrique, on effectue exactement deux mesures de pression acoustique, l'une dans une direction axiale et l'autre dans une direction radiale.

3. Procédé selon la revendication 1, caractérisé en ce que les répartitions des pressions acoustiques sont analysées dans une bande de fréquence d'environ 4 à 12 kHz.

4. Procédé selon la revendication 1, caractérisé en ce que lors de la comparaison des résultats d'analyse avec les courbes de référence, on compare les fréquences des pics caractéristiques.

5. Procédé selon la revendication 1, caractérisé en ce que lors de la comparaison des résultats d'analyse avec les courbes de référence, on compare le nombre de pics à l'intérieur d'une bande de fréquence choisie.

6. Procédé selon la revendication 1, caractérisé en ce que lors de la comparaison des résultats d'analyse avec les courbes de référence, on compare les pressions acoustiques des pics caractéristiques.

7. Procédé selon la revendication 1, caractérisé en ce que lors de l'analyse des répartitions de pression acoustique, on ne tient pas compte du bruit d'impact du butoir au moment de l'impact.

8. Procédé selon la revendication 7, caractérisé en ce que l'analyse se déclenche entre 5 et 30 ms après l'impact du butoir.

9. Procédé selon la revendication 1, caractérisé en ce que le butoir forme la masse d'un pendule et qu'il est lâché à chaque contrôle à partir du même point de la trajectoire du pendule.

10. Procédé selon la revendication 1, caractérisé en ce que le butoir frappe l'une des faces frontales d'un monolithe cylindrique.

11. Procédé selon la revendication 10, caractérisé en ce que le butoir frappe le centre de la face frontale.

12. Procédé selon la revendication 1, caractérisé en ce que la comparaison des résultats d'analyse avec les courbes de référence a lieu dans une unité de calcul.

13. Procédé selon la revendication 12, caractérisé en ce qu'une unité d'affichage est commandée à partir de l'unité de calcul, l'unité d'affichage indiquant si le bruit émis par le monolithe contrôlé se situe en dedans ou en dehors de la courbe de référence ou d'une bande de tolérance prédéterminée entourant la courbe de référence.

14. Procédé selon la revendication 13, caractérisé en ce que l'unité d'affichage produit un signal acoustique.

15. Procédé selon la revendication 13, caractérisé en ce que l'unité d'affichage produit un signal optique dans le cas d'un monolithe défectueux ou en cas de nécessité de répéter le contrôle.

16. Dispositif pour la mise en oeuvre du procédé selon la revendication 1, comportant un logement pour le monolithe (3) à contrôler, un dispositif de butoir (16) comprenant un butoir mobile (8), au moins deux capteurs de pression acoustiques espacés l'un par rapport à l'autre et dirigés dans des directions nettement distinctes, et une unité d'exploitation (23) reliée aux capteurs de pression acoustique, comprenant une unité de calcul qui effectue la comparaison des résultats d'analyse obtenus dans l'unité d 'exploitation avec des courbes de référence.

17. Dispositif selon la revendication 16, caractérisé en ce que les deux capteurs de pression acoustique (13,14) sont disposés de telle manière que l'un d'eux est dirigé vers la face frontale opposée au dispositif de butoir (16) et que l'autre est dirigé vers la surface périphérique du monolithe à contrôler.

18. Dispositif selon la revendication 16, caractérisé par une unité de calcul comprise dans l'unité d'exploitation (23) et par une unité d'affichage (27) connectée à l'unité de calcul.

19. Dispositif selon la revendication 16, caractérisé en ce que le logement (2) comporte trois supports pour poser le monolithe (3).

20. Dispositif selon la revendication 16, caractérisé en ce que le logement (2) est réalisé sous forme de plateau de fixation (4) et qu'au moins un support est conformé en élément de fixation (5) adapté au monolithe à contrôler.

21. Dispositif selon la revendication 20, caractérisé en ce que le plateau de fixation (4) est fixé sur une plaque de base au moyen d'un dispositif de serrage rapide (10).

22. Dispositif selon la revendication 19, caractérisé en ce que les supports comportent le cas échéant des éléments d'atténuation (30) en un matériau souple élastique sur les surfaces de contact avec le monolithe (3).

23. Dispositif selon la revendication 16, caractérisé en ce que le dispositif de butoir (16) comprend un pendule (17), sur la tige (31) duquel le butoir (8) forme la masse de pendule.

24. Dispositif selon la revendication 23, caractérisé en ce que le butoir (8) est constitué d'un matériau ferromagnétique et en ce que le dispositif de butoir (16) comporte un électroaimant (22) disposé à l'extrémité supérieure de la trajectoire pendulaire du butoir (3).

25. Dispositif selon la revendication 16, caractérisé en ce que des microphones à condensateur (13,14) sont prévus en tant que capteurs de pression acoustique.

26. Dispositif selon la revendication 16, caractérisé en ce que l'unité d'exploitation (23) comprend un analyseur de fréquence FFT.

27. Dispositif selon la revendication 18, caractérisé en ce qu'il est prévu par l'unité de calcul un retard de 5 à 30 ms après l'impact du butoir (8) sur le monolithe (3), pour l'analyse de fréquence.
